Europäisches Patentamt

European Patent Office

Office européen des brevets

(19)

(11) Publication number: **0 322 223**
**A2**

# EUROPEAN PATENT APPLICATION

(12)

(21) Application number: **88312129.5**

(22) Date of filing: **21.12.88**

(51) Int. Cl.4: **A 61 C 17/02**
**A 61 C 5/00**

(30) Priority: **22.12.87 US 136309**

(43) Date of publication of application:
**28.06.89 Bulletin 89/26**

(84) Designated Contracting States:
**AT BE CH DE ES FR GB GR IT LI LU NL SE**

(71) Applicant: **NATIONAL PATENT DEVELOPMENT CORPORATION**
9 West 57th Street - Room 4170
New York New York 10019 (US)

(72) Inventor: **Friedman, Aaron**
45 Stonegate Drive
Wethersfield Connecticut 06109 (US)

**Minns, Gordon H.**
34 S. Main Street
Suffield Connecticut 06078 (US)

(74) Representative: **Bannerman, David Gardner et al**
Withers & Rogers 4 Dyer's Buildings Holborn
London, EC1N 2JT (GB)

(54) Apparatus for mixing the components of a liquid body treatment composition.

(57) Apparatus is provided by which a liquid body treatment composition, e.g., an activated dental solution formulated from two separate liquids components, is delivered to a subject undergoing treatment. The apparatus includes solution mixing and pumping means and, optionally, a heater unit for heating the solution to body temperature prior to delivery to the subject. The apparatus is characterized by its compact size and high treatment solution storage capacity.

EP 0 322 223 A2

## Description

# APPARATUS FOR MIXING THE COMPONENTS OF A LIQUID BODY TREATMENT COMPOSITION

### BACKGROUND OF THE INVENTION

This invention relates to apparatus for combining the components of a liquid body treatment composition just prior to use and dispensing and delivering the freshly prepared liquid composition to a subject undergoing treatment, preferably at a temperature which is at or near the temperature of the subject's body to minimize discomfort to the subject. The invention further relates to a reservoir, or container, especially adapted for use with such an apparatus. In a particular embodiment, the invention relates to an apparatus for combining the components of a caries treatment liquid immediately preceding its delivery to the oral cavity of a subject who is to undergo treatment.

A common method for removing carious lesions from teeth is through the use of power operated tools such as dental drills and burrs. Treatment with such tools often entails considerable apprehension in patients, especially children. Although anesthesia may be available, its use is inappropriate for those patients experiencing adverse reactions to its administration. To circumvent these difficulties, methods have been developed which utilize certain chemical solutions to soften dental caries facilitating their removal. Such methods substantially reduce, and may even eliminate, the need for mechanical removal of the carious lesions by the use of drills and burrs. Utilization of these solutions, methods of employing same and apparatus for applying the solution are described in U.S. Patent Nos. 3,886,266; 3,932,605; 3,991,107; 4,012,842;3,776,825 and 3,863,628, the contents of which are incorporated herein by reference.

In administering these caries removal solutions to a carious lesion, a handpiece with a specially designed applicator tip can be used to direct solution flow at the lesion site with the solution generally being delivered in a gently pulsating stream which softens the decayed material. The dentist can then remove the softened carious material by light abrasion with the applicator tip while flushing with the solution.

Desirably, the temperature of the caries removal solution at the time of application to the carious lesion should be maintained within a range that minimizes discomfort to the dental patient, e.g., from about 90° F. to about 105° F., which covers the range of normal body temperature of the patient. A solution temperature outside this range can cause discomfort and may even traumatize the patient. Further, the chemical solution is applied to the carious lesion as a soothing, pulsating stream through a tube connected to the applicator tip at an optimum flow rate of about 35 ± 5 ml/minute, the stream pulsation frequency desirably being in the range of about 1000 to about 1600 cycles/minute while its pressure advantageously is from about 10 to about 15 psi (per pulsation cycle). The flow rate, pulsation rate and pressure of the stream will be selected so as to balance ease of application of the stream to the caries site with due regard for the patient's comfort.

One of the disadvantages in the prior use of a caries removal solution, especially one of the composition described above, has been that it has a relatively short half life. Thus it has been the practice of the dentist or technician to mix together the two liquid components of which the solution is formulated just prior to the time of use. This is a practice which tends to discourage the mixing together of any sizable quantity of the two liquid components since any amount of the active treatment solution which is not used within its half life, e.g., within about 60 minutes, becomes deteriorated to the point where it must be discarded. However, preparation of a more limited quantity of treatment solution presents the drawback of potentially diverting the dentist's attention away from treating a patient to having to replenish the caries treatment liquid.

The various types of apparatus heretofore employed for the delivery of dental treatment fluids are not readily adapted to the delivery of a caries removal solution which requires fresh formulation from two separate liquid components on a demand or as-needed basis. In addition, known types of apparatus tend to be of such limited storage capacity for the treatment solution that there is a relatively frequent need to interrupt patient treatment for the purpose of preparing additional treatment solution.

U.S. Patent Nos. 4,193,196 and 4,193,197 both disclose apparatus for the delivery of fluids in connection with dental treatment procedures. The apparatus features a fluid supply unit, fluid coupling means connecting the fluid supply unit to a dental instrument so that fluid flows through a control valve to a dental handpiece and a single fluid reservoir for storing and dispensing a variety of dental hygiene fluids. In one embodiment, a fluid reservoir is provided with a seal or rubber stopper at one end with an air pump (part of the fluid supply unit) having at one end thereof a pair of spaced apart prongs or piercing elements adapted to pierce the seal or stopper of the reservoir. Air pumped into the reservoir through one of the prongs pressurizes its contents forcing them out through the other prong. In this manner, fluid is delivered to the handpiece. However, neither of these patents contemplates delivery of two separate liquid components which must be mixed together to form an active dental treating solution just prior to use.

Accordingly, it is an object of this invention to provide apparatus for delivering a freshly prepared body treatment fluid, e.g., a caries removal solution, to a subject undergoing treatment, preferably at or about the subject's body temperature, as and in the quantity required for a given treatment situation.

It is another object of the invention to provide a fluid delivery apparatus which features simple, yet accurate, control of the quantity of fluid dispensed therefrom to a patient.

Still another object of the invention is to provide a fluid dispensing and delivery system possessing a large fluid storage capacity relative to its size.

It is a further object of the invention to provide a fluid storage container, preferably one which is non-refillable and disposable and which is capable of preserving the sterility of its contents throughout the period of its use, which is especially adapted for use with the fluid delivery apparatus herein.

Other objects will be made clear from the description of the invention hereinafter set forth.

## SUMMARY OF THE INVENTION

In its broadest aspects, the invention is an apparatus for delivering freshly prepared liquid body treatment composition comprising first and second liquid components to a point of use therefore which comprises:

a) a housing having a reservoir-receiving support surface and a reservoir-mounting wall surface;

b) first and second reservoirs securely, but removably, received on the support surface of the housing in a predetermined position relative to the mounting wall surface, the first and second reservoirs containing the first and second liquid components, respectively, of the body treatment composition, each reservoir possessing
- an enclosure for the liquid,
- a pressure conduit having an inlet communicating with the exterior of the reservoir and positioned on the side of the reservoir adjacent the top thereof, and an outlet positioned within the interior of the reservoir, the pressure conduit admitting gas at or above atmospheric pressure to the interior of the reservoir as liquid is dispensed therefrom,
- a fluid conduit having an inlet adjacent the bottom of the reservoir and an outlet communicating with the exterior of the reservoir and positioned on the side of the container adjacent the top thereof and in proximity to the inlet of the pressure conduit, the fluid conduit providing passage of liquid from the reservoir to the exterior thereof,
- seal means occluding the inlet of the pressure conduit and the outlet of the fluid conduit;

c) pressure and fluid conduit receiving members associated with the mounting wall of the housing such that upon installation of a reservoir on the support surface of the housing, said receiving members simultaneously penetrating the seal means occluding the inlet of the pressure conduit and the outlet of the fluid conduit and forming fluid-tight couples therewith;

d) means cooperating with the pressure and fluid conduit receiving members for providing a flow of liquid from each of the first and second reservoirs to the intakes of a mixing manifold, said manifold effecting the mixing of the liquids to provide the liquid body treatment composition; and,

e) means for delivering liquid body treatment composition from the outlet of the mixing manifold to a point of use therefor.

In one embodiment, the foregoing apparatus is particularly adapted for the delivery of a caries removal solution to a patient's oral cavity, the caries removal solution being formulated by mixing together liquid components to form the activated treatment solution in response to specific demand for the solution so that there is little or no wastage of either the solution or the components from which it is formed. The invention is, however, not limited to this specific purpose since it can also be used for delivering other types of solutions for body treatment purposes.

## BRIEF DESCRIPTION OF THE DRAWINGS

A fuller understanding of the nature and objects of the invention will be had from the following detailed description taken in conjunction with the accompanying drawings in which:

Fig. 1 is a perspective view of one embodiment of a liquid body treatment delivery apparatus in accordance with the present invention, there being shown in place on the apparatus first and second reservoirs containing the first and second liquid components, respectively, of a dental caries/plaque removal solution;

Fig. 2 is a perspective view of the apparatus of Fig. 1 with portions of the upstanding rear part of the housing shown broken away for purposes of illustrating various of the operating components arranged within the housing;

Fig. 3 is a side elevational view of one of the reservoirs illustrating the manner in which the reservoir cooperates with pressure and fluid conduit receiving members associated with the housing mounting which, upon installation of the reservoir, simultaneously penetrate the reservoir seal and form fluid-tight couples with the pressure and fluid conduits of the reservoir;

Fig. 4 is a horizontal sectional view taken through a reservoir showing details of the reservoir sealing unit and the penetration thereof by the pressure and fluid conduit receiving members;

Fig. 5 is a diagrammatic illustration of an air drafting system for dispensing the first and second liquid components from their respective reservoirs and effecting their mixing and delivery to the oral cavity of a subject undergoing treatment;

Fig. 6 is a view similar to Figure 5 but showing the use of positive displacement pump units associated with the reservoirs for dispensing liquid therefrom;

Fig. 7 is a perspective view of a handpiece employed with the apparatus for the controlled delivery of the treating solution to the oral cavity and showing the control ports thereon associated with solution on/off and purge cycles;

Fig. 8 is a schematic wiring diagram depicting the controlling of on/off operation of the air draft liquid delivery system of Fig. 5 as well as a purge cycle therefor;

Fig. 9 is a schematic illustration of the manner of operation of the on/off and purge control functions of the handpiece of Fig. 7;

Fig. 10 is a front view in elevation of one embodiment of a heater device disclosed and claimed in U.S. patent application Serial No. 827,773, filed February 7, 1986 which can be incorporated into the apparatus of this invention;

Fig. 11 is a top plan view of the heater device of Fig. 10; and,

Fig. 12 is a side view in elevation of the heater device of Fig. 11 as seen from the right hand side thereof.

Throughout the following description, like reference numerals are used to denote like parts in the drawings.

## DESCRIPTION OF THE PREFERRED EMBODIMENTS

The preferred apparatus includes a compact housing in which a stock of the liquid components from which the body treating solution is formulated and the various operating components such as the fluid dispensing means, mixing manifold, optional fluid heating means, etc., are arranged. A handpiece is provided for the controlled delivery to, and directing of a flow of the treating solution onto, the site being treated, e.g., the teeth.

The housing, which is styled and designed for use at the dental treatment site where it presents a compact, esthetically appealing appearance, includes a low profile frontal portion having a supporting surface defined by recessed seats on which are received two reservoirs each of which holds a quantity of one of the two liquid components from which the body treatment solution is formulated. The components are separately stored in the reservoirs until there is a demand for treating solution thus minimizing wastage. The reservoirs are advantageously given a configuration which tends to maximize their storage capacity while retaining relatively overall compact dimensions.

In a preferred embodiment, the apparatus of the invention is characterized by an optimum capacity for a stock of the components of the liquid body treatment composition (about one liter of each of the two components) relative to the size of the apparatus, e.g., an apparatus of about 8/12 inches deep by 11 inches long and 6 inches high. In a particular arrangement, the reservoirs extend fully across the front side of the housing, each possessing a generally cuboidal configuration and having a laterally projecting offset outlet neck portion immediately proximate the top thereof. The neck portion and outlet therefrom face an upstanding rear section of the housing and upon installation of the reservoir, assume a position which is closely adjacent a mounting wall. A pair of coupling or connector fittings, one each associated with a reservoir, are carried on the mounting wall and face the outlet necks of the reservoirs when the latter have been properly seated on the mounting surface. Piercing stubs fixed in the coupling units function during the installation of the containers to penetrate seal units which occlude the neck openings of the reservoirs, the seal units serving to maintain the contents of the reservoirs in the sterile condition before use and during the time the reservoirs are in place on the apparatus.

To facilitate guidance of the reservoir neck portions and more particularly the seal units thereof so as to achieve properly aligned engagement with the piercing stubs, the mounting wall may be rearwardly recessed in the form of sockets closely receptive of the reservoir neck portions.

The dental caries treating solution is made up of two liquid components which when brought together become activated to form the required treating solution. A suitable solution, designated Solution S, can be prepared by forming an admixture containing (a) at least one aminoalkanoic acid containing from 1 to about 18 carbon atoms, e.g., DL-2-aminobutyric acid, glycine, etc., (b) an alkali metal hydroxide, e.g., sodium hydroxide, (c) an alkali metal halide, e.g., sodium chloride, and (d) an alkali metal hypochlorite, e.g., sodium hypochlorite, in deionized water and preferably maintained at a pH of from about 9 to about 12. The active ingredient is believed to be N-chlorinated aminoalkanoic acid(s) and/or the alkali metal salt(s) thereof. A preferred formulation is (a) DL-2-aminobutyric and/or glycine, (b) sodium hydroxide, (c) sodium chloride and (d) sodium hypochlorite. The molar ratios of components (a), (b) and (c) can vary but advantageously are about 1:1:1 with the molar ratio of component (a) relative to component (d) exceeding 1, e.g., about 5 to 10, in one liter of deionized water. The active ingredient presumably reacts with the decalcified, partially degraded collagen of the carious lesion resulting in a softening of the carious material.

The apparatus allows only the required amount of treatment solution to be dispensed at the site where needed and this only upon bringing together of the precise volumetric measure of the two liquid components needed to meet the demand. There is no requirement for premixing as in other delivery systems and therefore the half-life problems associated with a premixing operation are completely avoided.

To dispense the liquid components from the respective reservoirs in the required quantities, an air drafting system can be employed. In such an arrangement, the dentist (or other operator) merely needs to manipulate a suitable finger-operated control on the handpiece or alternatively, a footswitch control as, e.g., shown in U.S. Patent No. 3,863,628, or a control switch located on the housing. The two head spaces of the reservoirs will become directly connected to a source of pressurized air, for example, at a pressure of about 14-15 psig, which head pressure will draft liquid from each reservoir through the fluid conduits. The individual liquids will be introduced to a manifold where substantially equal volumetric quantities thereof are mixed together and become activated to provide the body treatment solution. Thereafter, the solution under drafting pressure may be made to pass through an optional heater unit which heats the solution to a desired body temperature, e.g., from about 90°F to about 105°F. The pressurized flow of solution is then delivered by means of a flexible conduit, e.g., plastic tubing, to the handpiece from which it can be directed in a confined flow against the teeth of a patient undergoing treatment.

For the purpose of effecting pressure drafting of the liquid components from the respective reservoirs, the source of pressurized air can be a self-contained one, e.g., as provided by a small motor driven compressor-air receiver unit. The pressure source can also be external to the apparatus, e.g., a pressurized air line which can be found in many dental offices. Alternatively, the liquid components can be dispensed from the reservoirs with conventional pump means carried in the housing, such pump means desirably being a positive displacement reciprocating type pump.

The optional heater unit with which the treatment solution may be heated may, in one convenient form thereof, comprise a heat sink block in which there is imbedded or otherwise formed a conduit passage through which the solution passes during travel from the manifold to the handpiece, and an electrical resistance heating element associated with the heat sink block, such heating unit having the heat capacity and temperature control features described in commonly owned copending U.S. patent application Serial No. 827,793 filed February 7, 1986.

The invention also contemplates mixing of the two liquid components in a manifold subsequent to their being heated. In such a case, the components can be heated separately in either a single heating unit having two independent through passages associated with each of the liquids, or the heating units can be provided as two separate units.

An advantage of using air under pressure as the means for drafting liquid, in addition to providing the most precise volume delivery control, is the convenience with which the pressurized air can be employed for purging the delivery system of treatment solution when purging is desirable as, for example, subsequent to completing treatment with one patient and prior to utilization of the apparatus for treating another patient. During the purging operation which is controlled by separate purge control means, air under pressure can be delivered to the manifold to expel liquid from that point forward to the end use point. At the same time, pressure is maintained in the head space of the reservoirs to prevent backflow of liquid components thereto. Eventually, pressure is released in the head space and purge air causes liquid components upstream of the manifold to return to the reservoirs at the same time breaking any siphon path from the reservoirs to the manifold.

The operation of the foregoing apparatus is, as noted above, controlled directly from the handpiece. In one form thereof, this is accomplished through the use of pressure switches carried in the housing and connected by means of air conduits to the handpiece so that when there is demand for treating solution, the dentist by covering a handpiece port will cause activation of the pressure switch to effect control through appropriate circuitry of the operation of a solenoid air valve which admits or terminates pressurized air flow to the reservoirs. In this manner, control of drafting or termination of drafting of liquid from the reservoirs can be achieved. A similar pressure switch arrangement can be employed in conjunction with a second port and air conduit on the handpiece for the dentist to effect a purging cycle of the apparatus.

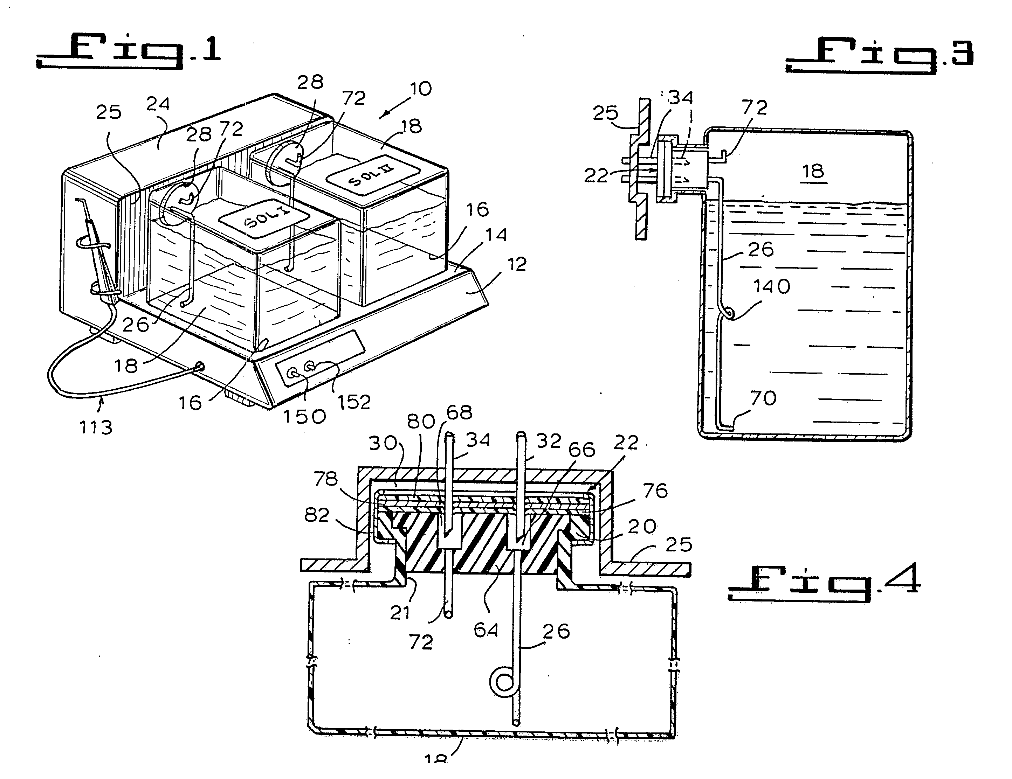

Referring now to Figs. 1-5 of the drawings, apparatus 10 includes a housing 12 which has a low profile frontal half-portion constituting a support surface 14 fitted with two recessed seats 16 on each of which can be readily removably received in predetermined positioning, one of the two liquid component-containing reservoirs 18, the liquid components when combined with each other forming the activated dental caries removal solution. Reservoirs 18 are provided preferably, but not essentially, as approximately cuboidal shaped enclosures of vertically foreshortened expanse. The containers are placed side-by-side on support surface 14 so as to occupy substantially the full width and depth of such surface and to extend vertically to the top of the overall housing. This arrangement tends to maximize the stock of solution forming components for a given size of apparatus. The reservoirs are provided with side neck portions 20 thereon, the neck portions encircling openings 21 at the reservoir tops, the neck portions being of the cylindrical configuration shown, positioned as high as possible proximate the reservoir top and having the enlarged annular flange-like end parts shown. Neck portions 20 face rearwardly of the housing when the reservoirs are inserted on mounting surface 14 and have sufficient sideways reach so that when the reservoirs are seated on seats 16, piercing conduit stubs will have penetrated the neck portion seal assembly unit as will be described shortly. Neck opening closures, or seal units, shown generally at 22 are arranged in neck portions 20 as will be described in more detail later.

Rear upstanding section 24 of the housing contains various operating components of the apparatus. Upstanding section 24 includes a front side mounting wall 25 on which is carried a pair of coupling fittings, or connectors, 28 associated one with each of the two reservoirs 18. Other components included in the housing comprise electrical circuit control devices 17 including a transformer 19 for operating the electrical resistance heating element hereinbelow described. The coupling fittings 28 can be accommodated in rearwardly directed sockets 30 (Fig. 4) formed in the mounting wall, the sockets receiving the reservoir neck portions as shown in that figure to facilitate proper registration placement of the reservoir neck portions with the after-described piercing stubs 32 and 34 carried on the coupling fittings. The conduit stubs serve to rupture the container seal units 22 and thereby establish flow communicative connection between the reservoirs and the various components which are associated with the drafting of liquid from the reservoirs for subsequent mixture thereof to provide the treatment solution for delivery to the treatment site. One piercing stub 32 effects outflow connection for fluid conduits 26 carried in each reservoir. The other piercing stub 34 serves as one of the two terminal ends of an air conduit 36 branched as shown and by means of which a pressurized flow of air can be delivered into the head spaces of the reservoirs, or, in the case of a positive displacement pump being used for drafting liquid from a reservoir, piercing stub 34 can function as an atmospheric vent line.

Piercing stub 32 possesses an extension 40 which connects the stub with a mixing manifold 42 arranged within housing section 24 thereby establishing a flow communication path for each liquid component whereby the same are delivered to the mixture point at manifold 42.

Air conduits 36 extend from electrically operated solenoid valve 44 the operation of which controls the delivery of air under pressure to the containers. The pressurized air can come from a source such as compressor unit 46 and receiver 48 contained within housing section 24. The compressor unit is an electrically operated component capable of producing compressed air in sufficient quantities for the required service and preferably for delivery thereof at a pressure of about 14 or 15 lbs. psig. When air under pressure from receiver 48 is delivered to the head spaces of the containers it exerts head pressure on the mass of liquid component to draft the liquid through outflow conduits 40 to manifold 42. Air pressure drafting is a particularly effective liquid pumping means in that by simple and slight air pressure alteration, any desired variation in volumetric flow can readily and easily be achieved.

Once the two liquid components have been brought into mixing contact within manifold 42, they react to form the activated treatment solution which then passes from outlet 50 of the manifold through conduit segment 52 to a heater unit of preferred type, shown generally at 54 and described in greater detail in connection with Figs. 10-12, prior to delivery to its point of use.

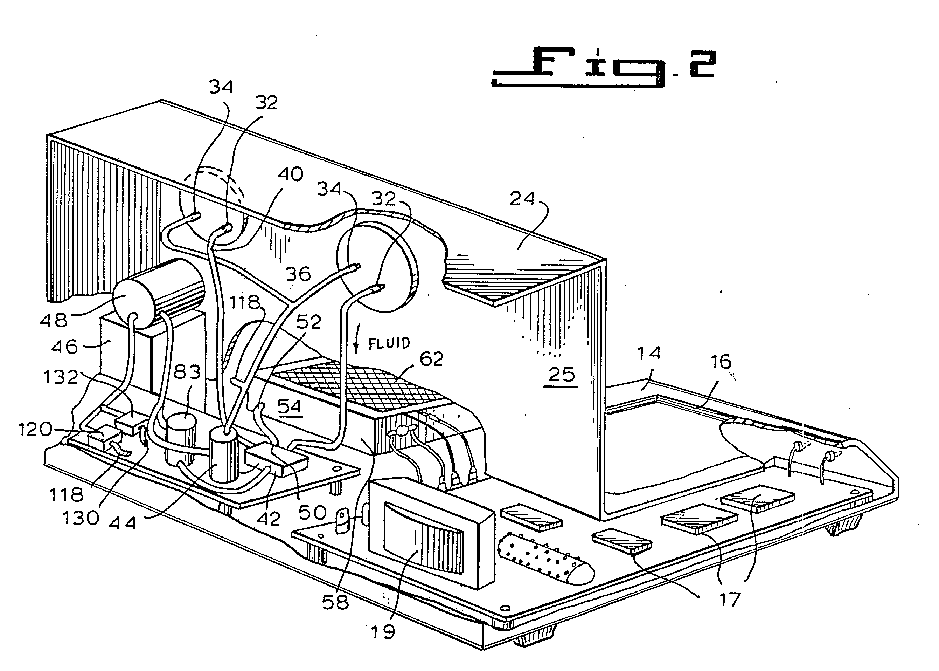

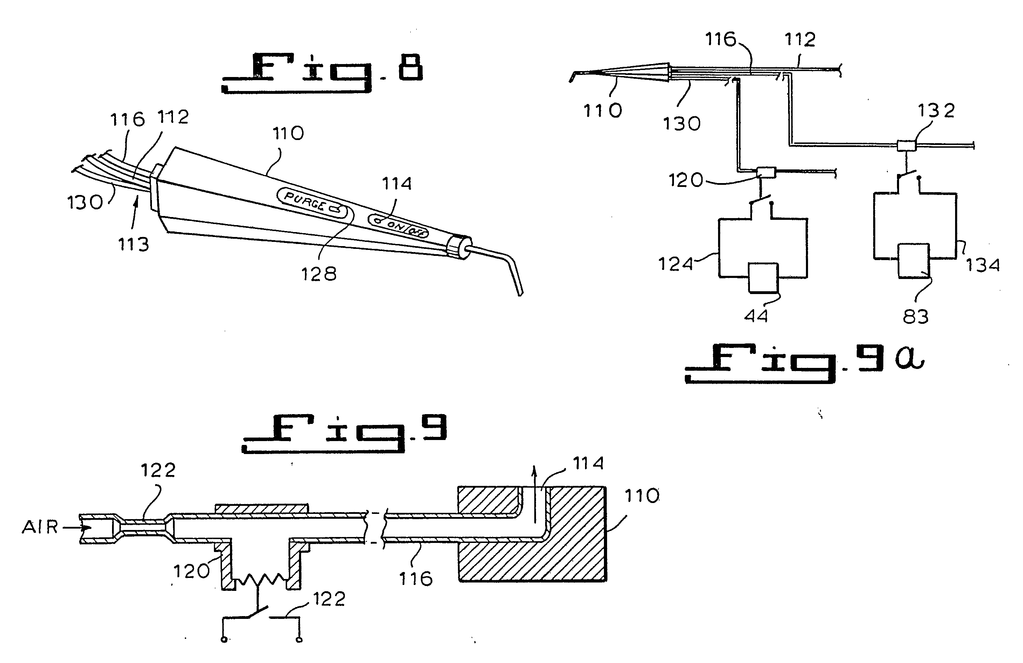

With reference to Figs. 3 and 4, it will be noted that the reservoir neck seal units 22 each include a plug-piece 64 of resilient material (thermoplastic or rubber) which is received in, and forms a fluid-tight couple with, opening 21 of the neck portions, the outer face of such plug-piece advantageously being planar flush with the annular outer side surface of reservoir neck portion 20. Plug piece 64 includes two enlarged spaces 66 and 68 therein and from its communicative juncture with one of these spaces 66, reservoir fluid conduit 26 extends downwardly through the liquid component mass and terminates near the bottom thereof in a curved terminal run 70 to provide maximum withdrawal of contents from the reservoir. The other opening 68 is in communication with a pressure conduit 72 which is part of the air admission circuit where air pressure drafting is employed, or alternatively, admits atmospheric air into the headspace for pressure equalization within the reservoir when the liquid component is dispensed therefrom with a positive displacement pump unit arrangement, e.g., as depicted in Fig. 6. Piercing stubs 32 and 34 carried on mounting wall 25 of the housing are designed in such a way that the reservoir upon being properly mounted or installed within the apparatus pierces the seal unit and is positioned within the respective spaces 66 and 68. By utilizing fluid-tight, resilient components in seal units 22, the piercing stubs, which have the sharp piercing tip ends shown, establish a fluid-tight passage for admission and dispensing of fluid and/or air as may be required.

Fig. 4 illustrates the manner in which the resilient components of the sealing unit form a fluid-tight fit with the stubs following penetration of the seal. Sealing of the reservoirs is provided by a resilient, preferably rubber or elastomeric, seal member 76 of generally circular profile which fits conformingly against the plug-piece outer face and the annular side edge of the reservoir neck. Optional overlaying seal member 76 can be a filter material layer 78 employed for the purpose of absorbing any dripping liquid which may have resulted during use of the apparatus and removal of contents from the reservoirs. A protective disc 80, e.g., of thermoplastic, overlays filter layer 78 and together with the other elements of the seal unit, is readily rupturable by piercing stubs 32 and 34 upon insertion of the reservoirs in the apparatus. To ensure an overall fluid-tight integrity in seal unit 21, a metallic annular crimp band 82 is received over the assembly as shown.

As noted above, solenoid valve 44 is used for admitting drafting air to the containers. Two such valves can be used in association with the two reservoirs but excellent results and reduced costs may be achieved with a single solenoid control valve. An advantage of using air drafting means for delivering pressurized flow of the liquid components to the manifold is the uniformity of drafting force represented by air pressure that allows for very precise drafting of equal quantities of liquid components from the respective two reservoirs to comport with the requirement that substantially equal amounts thereof be mixed together for forming the activated body treatment solution.

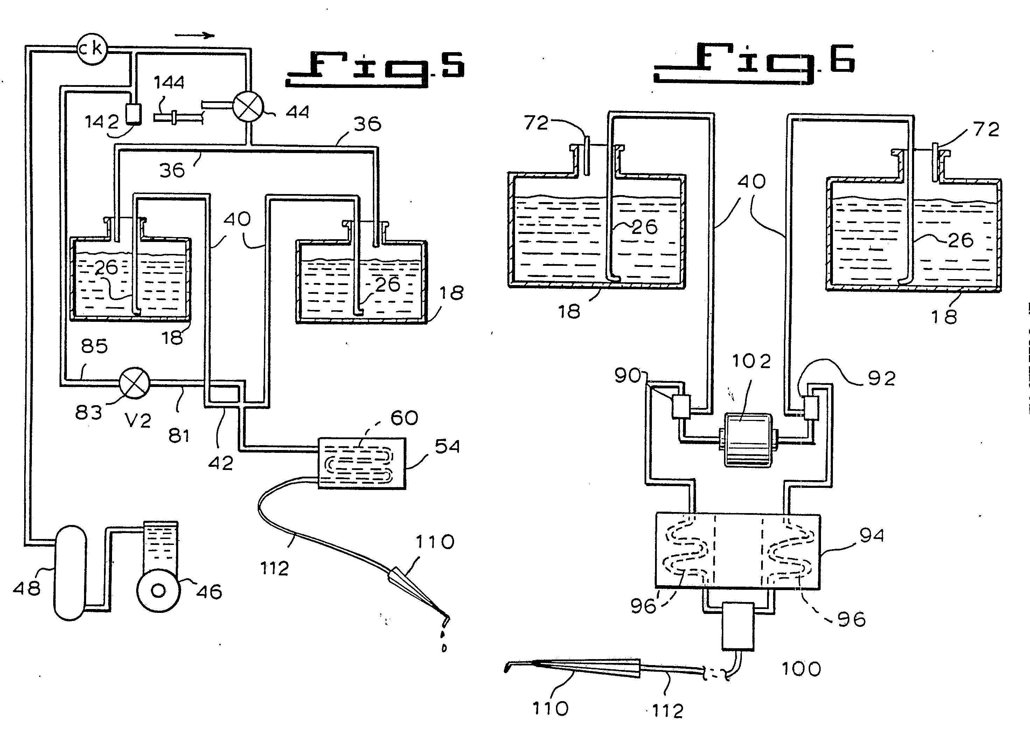

It also provides for convenient and simplified purging of the delivery system. As seen in Figs. 2 and 5, a purge line 81 connects solenoid valve 83 with manifold 42, valve 83 also being connected by supply line 85 with a source of pressurized air. When it is desired and/or necessary to effect a purging of the delivery system, valves 44 and 83 are operated to admit air to the reservoir head spaces and to the manifold. Head pressure in the reservoirs prevents back flow of liquid components thereto. Air from valve 83 prevents outflow from lines 40 but liquid in the manifold and downstream thereof is blown out by the pressurized air admitted from valve 83. Solenoid valve 44 is then de-energized and air from valve 83 back flows liquid components from lines 40 into the respective reservoirs and also breaks the siphon path from the reservoirs to the manifold. Valve 83 is then de-energized immediately to minimize any air flow from valve 83 into the containers and the result is a purged system wherein no liquid component presence exists outwardly of the reservoirs through outflow conduit 26 (above container liquid level), conduit stub 34, lines 40, the manifold and all the way to the discharge tip end of handpiece 110.

Fig. 6 shows another form of drafting means, more particularly, positive displacement reciprocating type pump units. Thus, pump units 90 and 92 can be used, one each associated with one of the two liquid components. The embodiment of Fig. 6 illustrates the option available for effecting separate delivery of the liquid components through a heater unit 94 to heat same to a required temperature and before the components are brought into activating mixing contact one with the other. The heater unit can have separate conduit courses 96 and 96' extending therein for the separate heating of the liquid components prior to the mixing together of these components in manifold 100. While heater unit 94 is shown as providing a single heat sink with two separate flow-through passages therein, it will be understood that two separate heat sinks can be used (such two sinks being shown by the dashed lines) as can separate pump drives in place of common pump drive motor 102.

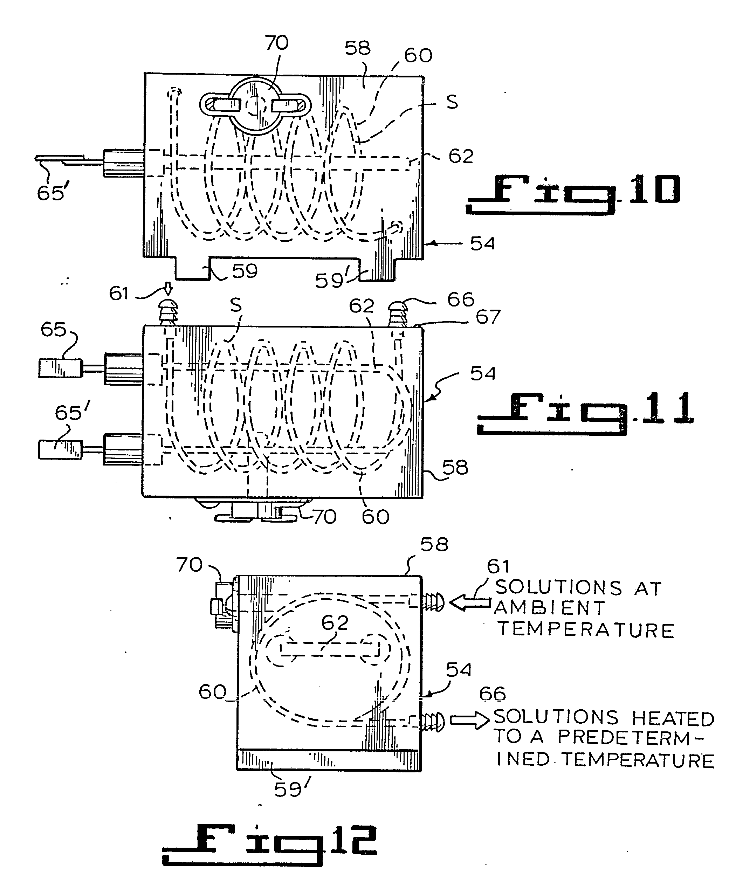

Figs. 8 and 9 illustrate one manner in which on/off control of solution flow can be effected readily and conveniently with handpiece 110 connected to manifold 42 by means of flexible delivery hose 112 which is part of a plural hose assembly 113 as will be more fully explained below. An on/off port 114 on the handpiece communicates with an air control conduit 116 (part of assembly 113) stretching from the handpiece to the housing as at 118. Air conduit 116 is operatively connected with pressure switch 120. By blocking port 114 with one's finger, the air flow downstream of venturi 122 has its pressure condition changed thereby altering the set condition of pressure switch unit 120 (Fig. 2) to close switch 122 and energize control circuit 124 which operates solenoid valve 44 for admitting air under pressure to the reservoirs and the consequent drafting of liquid therefrom. By uncovering the port, the condition of the pressure switch will be changed so that the switch will open to de-energize the circuit and air pressure flow to the reservoirs will be discontinued or, alternatively, a control arrangement embodying a flip-flop circuit can be used to allow the removal of one's finger from port 114 so that when it is desired to terminate solution flow, port 114 can once again be blocked. Another port 128 on the handpiece, a separate conduit 130 (part of assembly 113) and another pressure switch 132 (Fig. 2) can be used in conjunction with purging control through circuit 134 for controlling solenoid valve 83, this being accomplished, e.g., with the same type of venturi arrangement described above but wherein the venturi restriction can be of a size different than that of venturi 122 so that switch 132 will be activated by a pressure valve different from that associated with operation of pressure switch 120.

Referring to Figs. 10-12, heat sink 58 of heater device 54 is provided as a casting of aluminum metal.

Cast block 58 is provided with depending rectangular support legs 59 and 59' for supporting the block on a planar surface. A generally U-shaped electrical resistance heating element 62, e.g., of nichrome wire, and of suitable power rating, e.g., from about 30 to about 120 watts and preferably from about 40 to about 100 watts, surrounded by ceramic electrical insulation 63 and encased in a protective sheath 64, e.g., of stainless steel, is embedded in the aluminum casting and is provided with external leads 65 and 65' for connecting the heating element to an electrical current source. Heating element 62 can be operated at a constant or varying power level. In the case of the latter, the heating element can be operated for a brief period at the upper end of its rated power range when the unit is first turned on in order to accelerate the heating of cast block 58 and thereafter the power can be reduced to a lower level. A flow of liquid to be heated, designated Solution S, is introduced into helical, or coiled, conduit 60 at inlet 61 and, heated to the predetermined temperature, is discharged from the conduit at outlet 66. Any suitable means, e.g., compressor unit 46 of Fig. 2 or a pump, e.g., a positive displacement type pump such as a reciprocating piston-type pump (not shown) can be used to supply a flow of liquid through conduit 60. Like heating element 62, conduit 60 is embedded in the aluminum casting and is advantageously separated from the heating element by a distance which is sufficient to prevent or minimize the possibility of hot spots developing in Solution S. In operation, heating element 62 will transfer heat to aluminum block 58 which in turn will transfer heat to Solution S present in conduit 60. The temperature of the aluminum block governs the temperature of Solution S, the two being approximately the same.

A temperature sensor 67, e.g., a thermistor, can be mounted on the surface of aluminum block 58 near conduit outlet 66 as part of an arrangement for controlling the intermittent delivery and interruption of electrical power to the heating element whereby the desired predetermined level of temperature is substantially maintained.

Caries removal Solution S described _supra_ is intended to be delivered to the oral cavity of a patient as a fine pulsing stream heated to about the patient's normal body temperature, e.g., about 98.6°F, and maintained within this temperature within a few degrees, say about ± 5°F. A specific Solution S can be formulated as follows:

| | |
|---|---|
| DL-2-aminobutyric acid and/or Glycine | 0.04-0.06 Mol |
| Sodium Hydroxide | 0.04-0.06 Mol |
| Sodium Chloride | 0.04-0.06 Mol |
| Sodium Hypochlorite | 0.005-0.01 Mol |
| Deionized Water | An amount sufficient to make one liter of solution |
| pH of solution | approx. 10-12 at 20°C |

The foregoing solution is chemically reactive and therefore conduit 60 is preferably fabricated from a corrosion-resistant material, e.g., stainless steel.

In order to maintain Solution S at an optimum temperature, e.g., on the order of about 90°F to about 105°F, the exterior dimensions of cast aluminum block 58 and the length and diameter of coiled conduit 60 for a given flow rate of Solution S should be suitably selected. If block 58 is too small, it will not possess a sufficient reserve of heat storage capacity to be useful. The maximum amount of heat stored in the block should not exceed its heat capacity for otherwise it will increase in temperature beyond the optimum level desired. If block 58 is too large, it will take too long to heat up to the desired temperature level to be practical. In a preferred embodiment, it has been determined that stainless steel tubing having a minimum length of approximately 48 inches, a minimum internal diameter of about 0.125 inches and wall thickness of approximately 0.02 inches, embedded in an aluminum block whose approximate dimensions are 5 inches x 2 inches x 2 inches, is sufficient to obtain and consistently maintain a predetermined temperature of about 90°F to about 105°F in Solution S at a flow rate of 35 ± 5 ml/min. An optimum relationship has been found to exist between the volume of the block/volume of Solution S at a flow rate of 35 ± 5 ml/min. once the block has been heated to body temperature in order to attain and maintain proper heating of the solution as it passes through heater device 54. Practical considerations involving economics, time delays in heating and reheating the liquid during intermittent operations, size of the heater, the electrical power input, construction materials of choice, the predetermined temperatures of choice, and the like, will place realistic limits on the dimensions of the components comprising the heater device. Optimization is readily achieved by those skilled in the art.

The flow of Solution S may be interrupted from time to time. However, in certain applications, e.g., in the treatment of teeth with Solution S, since teeth are extremely sensitive to variations in temperature, the solution should still be delivered at a relatively constant temperature regardless of the frequency and duration with which the dentist interrupts the flow of the solution. In the steady state, a continuous input power of approximately 40 watts is usually required to heat Solution S from ambient temperature to a body temperature of approximately 98.6°F. A significant temperature gradient must exist between heating element 62 itself and Solution S passing through heater device 10 in order for sufficient heat energy to be transferred to the solution. At steady state operation, when the solution is being continuously passed through the heater device, electronic controls can regulate the power to the heating element as previously described so that the solution will be discharged at the required temperature. When the dentist releases a switch, e.g., a foot pedal or other suitable mechanism, Solution S ceases to flow through the heater. Residual heat energy stored in heating element 16 continues to transfer to casting 58 causing the temperature of the casting, and therefore the solution, to rise only a few degrees above the predetermined temperature of 90-105°F.

The relationship between the heat capacity of heating element 62 and the heat capacity of aluminum casting 58 which thermally couples conduit 60 containing Solution S to heating element 62, and the heat capacity of Solution S contained in heater device 54 at any given time can be empirically determined. The heater design exploits this relationship to limit the temperature rise during intermittent flow patterns. This ensures both the safety and comfort of the patient. The heat capacity of heating element 62 is limited to a small fraction of the heat capacity of the combined aluminum block 58 and liquid-containing stainless steel conduit 60. This limits the amount of residual heat energy which can transfer to the aluminum casting by the heating element after delivery of electric power to the latter is interrupted. In a preferred embodiment, the heat capacity of heating element 62 is from about 2 to about 10% of the heat capacity of the remainder of the heater; about 3 to about 5% is highly preferred.

A second temperature sensor 70 is provided as a safety device to prevent the temperature of the aluminum casting from exceeding a predetermined limit should temperature sensor 67 and/or its associated power control circuitry fail to operate properly.

The apparatus 10 embodies additional advantageous constructional features which will be described next.

With employment of an air drafting system for solution flow delivery coupled with use of fine or small diameter tubing (1/8") as flow conveyance means, accurate mixing of the two liquids components of Solution S in 50/50 ratio of each can readily be effected by taking advantage of Laplace's Fluid Resistance Law which describes the flow of liquid under pressures through tubing of known length and diameter. Thus, by simply selecting proper values of head pressure and flow conduit hydraulic resistance, mixing of fluids in any desired proportion can be achieved. This enables provision of a system in which two sources of liquid (under equal reservoir head pressure) can enter a dual flow path such that the flow of solution leaving manifold 42 is comprised of equal amounts of the respective two liquids. Once tubing size and pressure parameters have been established, no further adjustments are necessary to achieve the desired solution flow characteristics resulting in a very simple and reliable delivery apparatus arrangement. Establishment of a desired hydraulic resistance can include, inter alia, providing a twist as at 140 in the reservoir outlet conduits 26 (Figs. 3 and 4).

For connecting the apparatus with an outside source of pressurized air, a one-way flow fitting 142 (Fig. 5) can be connected to the air supply pipe conduit so that by inserting companion connector 144 (part of the dental office equipment) the necessary air under pressure is available for operation of the apparatus. Fitting 142 can be an alternative to use of compressor-receiver unit 46, 48 but preferably would be additional thereto since it then serves as a back-up in the event of compressor malfunction.

While the on/off operations of both solution supply and system purge most conveniently can be effected with the control features described above and by digital initiation with handpiece 110, on/off switches such as switches 150 and 152 shown in Fig. 1 can be used in lieu of the handpiece control means.

Liquid component reservoirs 18 are especially configured as previously described to provide the prolonged solution capacity not readily available from prior art apparatus arrangements. Further, the reservoirs are upright placed with side neck outflow to facilitate replacement insertion of the containers in the housing and also to eliminate the potential for leakage and possible contamination which could ensue whenever a liquid mass exerts pressure on a pass-through seal joint as occurs when reservoirs are inverted or otherwise disposed in a tilted supply disposition. In addition, quick convenient empty container replacement can be made since secure fluid communicative connection of same with the apparatus is made without the need to rely on threaded fittings, clamps or the like to establish this relationship. Containers 18 are conveniently fabricated from thermoplastic, e.g., polyethylene, polypropylene, etc., although other materials of construction are entirely suitable. It also will be noted that while two separate reservoirs are used and associated with the two solution component liquids, a single enclosure unit can be provided which is subdivided into two, advantageously equal, compartments each with its own fluid seal and dispensing system. Various arrangements of the two compartments are possible including side-by-side and concentric configurations.

As previously explained, it is today common that various dental solutions be delivered in pulsating stream form. Where the reciprocating positive displacement pumps shown in Figure 6 are used, the pulsation can be provided with the inherent pulsation flow effect derived from such type of pumps. On the other hand, where air drafting of the solution is practiced, ultrasonic solution vibration means can be provided, as for example, with a handpiece construction of the type described in U.S. Patent No. 3,924,335.

While there are above described only certain embodiments of the present invention, it will be understood that various modifications can be made to the apparatus by those skilled in the art while remaining within the scope of the inventive concept disclosed.

**Claims**

1. An apparatus for delivering freshly prepared liquid body treatment composition comprising first and second liquid components to a point of use therefore which comprises:

a) a housing having a reservoir-receiving support surface and a reservoir-mounting wall surface;

b) first and second reservoirs securely, but removably, received on the support surface of the housing in a predetermined position relative to the mounting wall surface, the first and second reservoirs containing the first and second liquid components, respectively, of the body treatment composition, each reservoir possessing

- an enclosure for the liquid,

- a pressure conduit having an inlet communicating with the exterior of the reservoir and positioned on the side of the reservoir adjacent the top thereof, and an outlet positioned within the interior of the reservoir, the pressure conduit admitting gas at or above atmospheric pressure to the interior of the reservoir as liquid is dispensed therefrom,

- a fluid conduit having an inlet adjacent the bottom of the reservoir and an outlet communicating with the exterior of the reservoir and positioned on the side of the reservoir adjacent the top thereof and in proximity to the inlet of the pressure conduit, the fluid conduit providing passage of liquid from the reservoir to the exterior thereof,

- seal means occluding the inlet of the pressure conduit and the outlet of the fluid conduit;

c) pressure and fluid conduit receiving members associated with the mounting wall of the housing such that upon installation of a reservoir on the support surface of the housing, said receiving members simultaneously penetrating the seal means occluding the inlet of the pressure conduit and the outlet of the fluid conduit and forming fluid-tight couples therewith;

d) means cooperating with the pressure and fluid conduit receiving members for providing a flow of liquid from each of the first and second reservoirs to the intakes of a mixing manifold, said manifold effecting the mixing of the liquids to provide the liquid body treatment composition; and,

e) means for delivering liquid body treatment composition from the outlet of the mixing manifold to a point of use therefor.

2. The apparatus of Claim 1 which further comprises means for heating the liquid body treatment composition prior to its delivery to the point of use.

3. The apparatus of Claim 2 wherein the heating means comprises

- a heat sink,

- an electrical resistance heating element in thermal transfer-contact with at least one surface of, or embedded within, the heat sink such that when electrical power is delivered to the heating element, heat is transferred therefrom to the heat sink and when the delivery of electrical power to the heating element is temporarily interrupted, residual heat in the heating element is transferred therefrom to the heat sink, the total quantity of heat transferred to the heat sink from the heating element not exceeding the heat capacity of the heat sink so that the temperature of the heat sink remains relatively constant both when electrical power is being delivered to the heating element and when the delivery of electrical power to the heating element is temporarily interrupted, and - a conduit for the flow of liquid body treatment composition to be heated to a predetermined temperature substantially corresponding to the temperature of the heat sink, the conduit having an inlet for admitting the liquid at a temperature below the predetermined temperature and an outlet for discharging the liquid at the predetermined temperature, the conduit being embedded within the heat sink such that heat is transferred from the heat sink to liquid present in the conduit raising the temperature of the liquid from the temperature at the conduit inlet to the predetermined temperature at the conduit outlet.

4. The apparatus of Claim 3 wherein the heating means further comprises control means for regulating the intermittent delivery and interruption of electrical power to the heating element in response to the temperature of the heat sink.

5. The apparatus of Claim 3 wherein the heating means further comprises means for discontinuing the delivery of electrical power to the heating element to prevent the temperature of the heat sink from exceeding a predetermined level.

6. The apparatus of Claim 4 wherein said regulating means is operable to maintain the temperature of the liquid body treatment composition at the conduit discharge at or about the normal temperature of a body with which the liquid is to be contacted.

7. The apparatus of Claim 1 wherein the means for providing a flow of liquid from a reservoir is a source of pressurized gas which is internal or external to housing (a), said pressurized gas being admitted to the reservoir through its pressure conduit.

8. The apparatus of Claim 7 wherein the source of pressurized gas is a compressor disposed within housing (a).

9. The apparatus of Claim 1 wherein the means for providing a flow of liquid from a reservoir is a pump having its intake coupled to the fluid conduit receiving member and its output coupled to the intake of the mixing manifold.

10. The apparatus of Claim 9 wherein the pump is a positive displacement type pump.

11. The apparatus of Claim 9 wherein the pump is a reciprocating piston-type pump.

12. The apparatus of Claim 9 in which a separate pump is associated with each reservoir.

13. The apparatus of Claim 12 in which each pump is driven by a common drive means.

14. The apparatus of Claim 1 which further comprises means for regulating the delivery of the liquid body treatment composition on a demand basis.

15. The apparatus of Claim 1 which further comprises valve means for regulating the delivery of the liquid body treatment composition on a demand basis.

16. The apparatus of Claim 1 wherein the valve means comprise separate solenoid operated valves.

17. The apparatus of Claim 1 wherein the means for delivering liquid body treatment composition from the outlet of the mixing manifold to the point of use comprises a flexible conduit coupled at one end to the outlet of the mixing manifold and at the other end to an operator-controlled handpiece.

18. A reservoir for storing and dispensing liquid which comprises:

a) an enclosure for the liquid;

b) a pressure conduit having an inlet communicating with the exterior of the reservoir and positioned on the side of the reservoir adjacent the top thereof, and an outlet positioned within the interior of the reservoir, the pressure conduit admitting gas at or above atmospheric pressure to the interior of the reservoir as liquid is dispensed therefrom;

c) a fluid conduit having an inlet adjacent the bottom of the reservoir and an outlet communicating with the exterior of the reservoir and positioned on the side of the container adjacent the top thereof and in proximity to the inlet of the pressure conduit, the fluid conduit providing passage of liquid from the reservoir to the exterior thereof; and,

d) seal means occluding the inlet of the pressure conduit and the outlet of the fluid conduit.

19. A method for delivering a freshly prepared liquid body treatment composition comprising first and second liquid components to a point of use therefor which comprises:

a) introducing a first liquid component dispensed from a first reservoir to an intake of a mixing manifold;

b) introducing a second liquid component from a second reservoir to an intake of the mixing manifold;

c) effecting mixing of the first and second liquid components to provide the liquid body treatment composition; and,

d) delivering the freshly prepared liquid body treatment composition to the site of use.

20. The method of Claim 19 wherein the liquid body treatment composition is one for treating carious lesions.

EP 0 322 223 A2

Fig.1

Fig.3

Fig.4

_Fig.2_

EP 0 322 223 A2

Fig.5

Fig.6

EP 0 322 223 A2

# Fig.8

116 112 110 114 PURGE ON

130 113 128

# Fig.9a

116 112 110 130 132 120 124 134 44 83

# Fig.9

122 114 110 AIR 120 116 122

70    58    60

S

62

_Fig_ 10

65'

59    59'

61    S    62    66
67
65

54

_Fig_ 11

65'

58    70    60

58

61 SOLUTIONS AT
AMBIENT
TEMPERATURE

62

60    54

66 SOLUTIONS HEATED
TO A PREDETERM-
INED TEMPERATURE

59'

_Fig_ 12